# EUROPEAN PATENT APPLICATION

(11) **EP 2 535 795 A2**
(43) Date of publication of application: **19.12.2012**
(21) Application number: 12004424.3
(22) Date of filing: 12.06.2012
(51) Int. Cl.: G06F 3/048

(54) **Manual operating device**

(30) Priority: 13.06.2011 JP 2011130807
(71) Applicant: Sharp Kabushiki Kaisha, Osaka-shi, Osaka 545-8522 (JP)
(72) Inventor: Ohnishi, Kazuyuki, Abeno-ku Osaka-shi Osaka 545-8522 (JP)
(74) Representative: Müller - Hoffmann & Partner

(57) **Abstract**

A manual operating device includes a display input device, an arm position sensing section, a physical position sensing section and a control section. The display input device includes a display section that displays an operating screen, and a touch panel. The arm position detecting section detects an arm of an operator at a plurality of positions in a right and left direction. The physical position sensing section detects a body of the operator at a plurality of positions in the right and left direction. The control section makes a determination as to whether it is right hand or left hand that the operator has touched the display input device with based on results detected by the arm position sensing section and the physical position sensing section, and then controls display of the display section based on the result of the right-or-left determination.

## Description

### BACKGROUND OF THE INVENTION

The present invention relates to a manual operating device equipped with a display input device that includes a display section for displaying an operating display and a touch position sensing section that detects a position of touch by an operator on the display section.

Manual operating devices each equipped with a display input device that includes a display section and a touch position sensing section have been used in various processing apparatus such as image forming apparatus. Among the display input devices is a LCD touch panel, for example. In such a manual operating device, operations for input such as setting conditions and/or operational orders are carried out through an operator's viewing the display section and touching the touch position sensing section directly with hand. An improvement in its operability has also been attempted by means of displaying pop-up images such as menu images and/or the like depending on the operations for input.

In manual operating devices as described above, although it can provide for more intuitive and plainer operations for input as compared with operations using a mouse or the like, there is, at the same time, a risk that its operability deteriorates when the hand touching the touch position sensing section hides a pop-up image from view. For example, it is quite often the case that operators touch the touch position sensing section with their index finger, so that a left hand will obstruct the pop-up image from view if an operator touches the touch position sensing section with the index finger of the left hand in a case where the pop-up image is displayed on the left side of the touch position.

Thus, as shown in Japanese Patent Unexamined Publication No. 2006-331092 bulletin, for example, a manual operating device is known in which a determination is made as to whether it is right hand or left hand that the operator has touched the display input device with depending on a distribution of the position of touch by the operator on the display section detected by the touch position sensing section, and in which an operating screen that depends on the result of the determination is displayed. In this conventional manual operating device, it is determined that the hand the operator used for the touch is left hand when the distribution of the position of touch on the display section moves from left to right in time during a single touching operation.

However, it may not necessarily be the case that the operator touches the display section with his or her left hand moving from left to right when using the left hand for the touch. For example, even when the hand used for a touch is left hand, the display section can be touched directly overhead. When the display section is touched directly overhead, it is impossible to determine a direction of movement of the distribution of the position of touch in time; so that it has not been possible in conventional manual operating devices to determine exactly whether it is right hand or left hand that has touched the display input device.

Moreover, when an operator stands at a position deviated to the right in relation to the display section, the operator may touch the display section with the left hand moving from right to left even when he or she uses the left hand for the touch. In this case, since the direction of movement of the distribution of the position of touch in time and the hand used for the touch are not in agreement with each other, it has not been possible in conventional manual operating devices to determine exactly whether it is right hand or left hand that has touched the display input device. Therefore, the conventional devices fail to display an appropriate next screen in response to the hand used for the touch, thereby deteriorating its operability.

The present invention is directed to providing a manual operating device that is capable of improving its operability by performing a display control that depends on whether it is right hand or left hand that the operator has touched the display input device with.

### SUMMARY OF THE INVENTION

A manual operating device according to the present invention comprises a display input device, an arm position sensing section, a physical position sensing section and a control section. The display input device includes a display section that displays an operating screen, and a touch position sensing section that detects a position of touch by an operator on the display section. The arm position sensing section detects an arm of the operator at a plurality of positions in a right and left direction. The physical position sensing section detects a body of the operator at a plurality of positions in the right and left direction. The control section makes a determination as to whether it is right hand or left hand that the operator has touched the display input device with based on results detected by the arm position sensing section and the physical position sensing section, and then controls display of the display section based on the result of the right-or-left determination.

In this configuration, the determination as to whether it is right hand or left hand that the operator has touched the display input device with is made based on a relation between the physical position and the arm position. For example, when the arm position is on the left side in relation to the physical position, it is determined that the hand that has touched the display input device is left hand. As a result, the right-or-left determination as to whether it is right hand or left hand that the operator has touched the display input device with can be made correctly. Also, display of the display section is controlled appropriately based on both the result of the correct right-or-left determination and the position of touch detected by the touch position sensing section.

The present invention allows for an improved operability of the manual operating device by causing it to perform a display control that depends on whether it is left hand or right hand that an operator has operated with.

### BRIEF DESCRIPTION OF THE DRAWINGS

FIG.1 is an external view of an image forming apparatus provided with a manual operating device according to an embodiment of the present invention.
FIG.2 is an external view of the manual operating device.
FIG.3 is a block diagram showing an outlined electrical configuration of the manual operating device.
FIG.4A is a view showing an example of a display screen, and FIG.4B is a view showing an example of a pop-up image.
FIG.5 is a depiction showing an example of a display control.
FIG.6A through FIG.6D are drawings showing states in which an operator has touched the display input device with right hand.
FIG.7A through FIG.7D are drawings showing states in which the operator has touched the display input device with left hand.
FIG.8A and FIG.8B are drawings showing a state in which the operator, standing in such a manner as to face left part of the manual operating device, has touched a left side edge portion of the display input device with right hand; and FIG.8C and FIG.8D are drawings showing a state in which the operator, standing in such a manner as to face right part of the manual operating device, has touched a right side edge portion of the display input device with left hand.

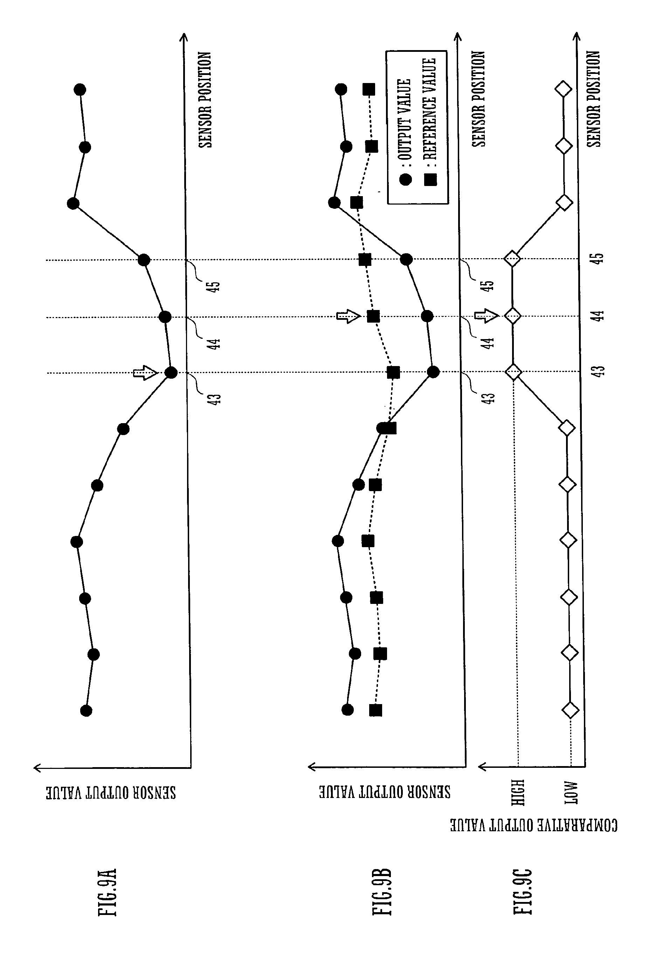

FIG.9A is a graph showing an example of a relationship between respective output values of a plurality of first sensors of an arm position sensing section and their positions in a right and left direction; FIG.9B includes the graph showing the example of the relationship between the respective output values of the plurality of first sensors of the arm position sensing section and their positions in the right and left direction, and a graph showing an example of respective reference values for the first sensors; and FIG.9C is a graph showing an example of comparative output values that compare the respective output values of the first sensors with the respective reference values therefor.

### DETAILED DESCRIPTION OF THE INVENTION

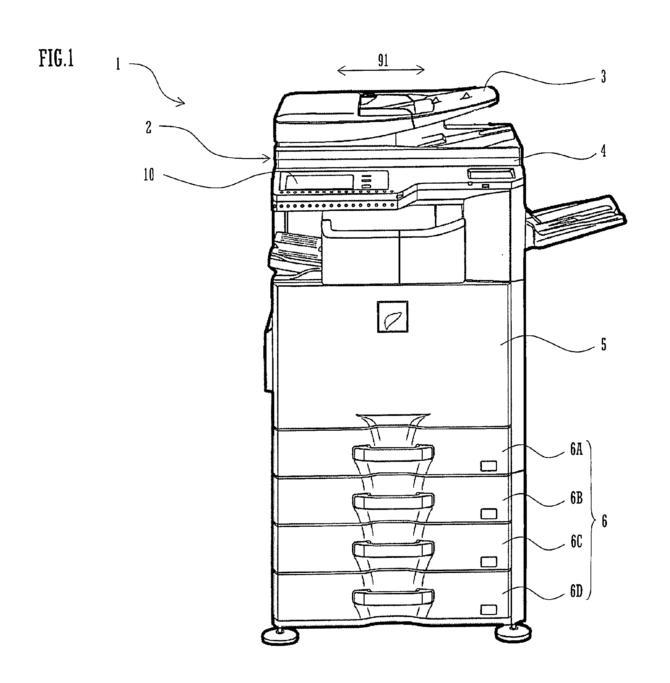

An embodiment of the present invention is explained below using the drawings. As shown in FIG.1, an image forming apparatus 1 includes a main body 2 and a manual operating device 10.

The main body 2 includes a document feeder 3, an image reading section 4, an image forming section 5 and a paper feeding section 6. The document feeder 3 conveys documents piece by piece by way of the image reading section 4. The image reading section 4, being provided with a document table which is not illustrated, reads an image on either a document that is placed on the document table or a document that is conveyed by way of the document table by the document feeder 3, and then produces image data.

The paper feeding section 6 includes a plurality of paper feed cassettes 6A, 6B, 6C, 6D. Each of the paper feed cassettes 6A, 6B, 6C, 6D receives a plurality of paper sheets, and supplies the image forming section 5 with the paper sheets piece by piece.

The image forming section 5 forms an image onto the paper sheet based on the image data produced by the image reading section 4 or image data inputted from outside.

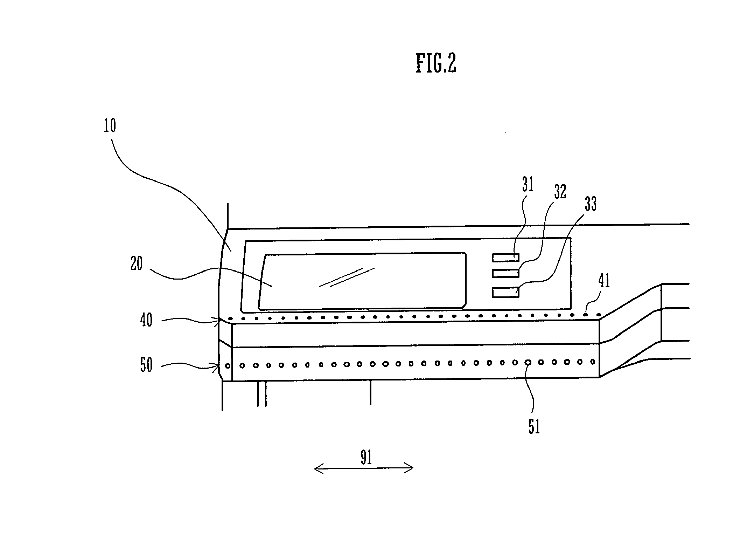

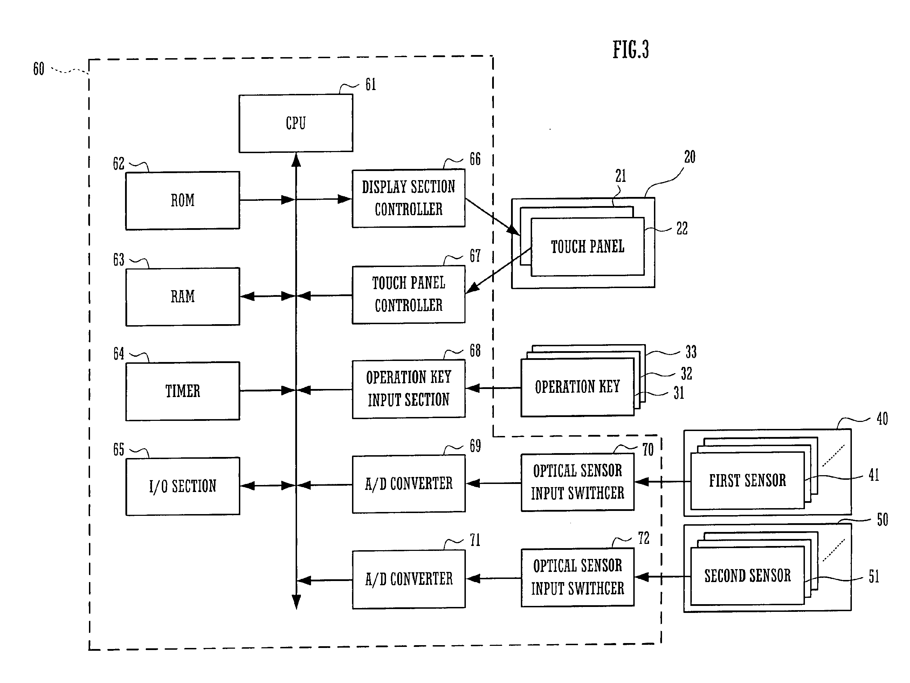

As shown in FIG.2, the manual operating device 10 comprises a display input device 20, operation keys 31, 32, 33, an arm position sensing section 40, a physical position sensing section 50 and a control section 60 (refer to FIG.3).

The display input device 20 includes a display section 21 and a touch panel 22. As an example, a LCD display is used for the display section 21. The display section 21 displays various operating screens. A touch panel 22 is an example of the touch position sensing section. The touch panel 22 is disposed in such a manner as to be superimposed on top of the display section 21 and configured unitedly together with the display section 21. The touch panel 22 is transparent, so that an operating screen that is displayed on the display section 21 can be viewed by the operator through the touch panel 22. The touch panel 22 detects a position of touch by the operator on the display section 21. Setting conditions and/or process requests such as operational orders are inputted based on a position of touch that the touch panel 22 detected and an image that is displayed at a position corresponding to the position of touch on the display section 21.

The operation keys 31, 32, 33 are provided separately from the display input device 20, and process requests to perform any of functions assigned to each of the operation keys 31, 32, 33 are attained by the operator's press-down of the corresponding keys. As an example, the operation keys 31, 32, 33 respectively represent a Start key, a Stop key, and a Home key that causes an operating screen displayed on the display section 21 to return to a predetermined home screen.

The arm position sensing section 40 includes a plurality of first sensors 41. For the first sensors 41, optical sensors are used. The first sensors 41 are arranged in a right and left direction 91 of the main body 2 on a front face side from the display input device 20 on the top face of the manual operating device 10..The arm position sensing section 40 detects an arm of the operator at a plurality of positions in the right and left direction 91.

The physical position sensing section 50 includes a plurality of second sensors 51. For the second sensor 51, optical sensors are used. The second sensors 51 are arranged in the right and left direction 91 on a front side face of the manual operating device 10. The physical position sensing section 50 detects a body of the operator at the plurality of positions in the right and left direction 91.

As shown in FIG.3, the control section 60 includes a CPU 61, a ROM 62, a RAM 63, a timer 64, an I/O section 65, a display section controller 66, a touch panel controller 67, an operation key input section 68, an A/D converter 69, an optical sensor input switcher 70, an A/D converter 71 and an optical sensor input switcher 72.

The CPU 61 controls the manual operating device 10 collectively according to a program stored in the ROM 62. The I/O section 65 is connected to a main control section of the main body 2. As an example, the CPU 61 receives, through the I/O section 65, an input of the image data produced by the image reading section 4, and causes the image data to be stored in the RAM 63. Also, the CPU 61 outputs, through the I/O section 65, a process request on the image that the operator has inputted using the display input device 20 to the main control section of the main body 2.

The timer 64 counts time, and outputs it to the CPU 61. As an example, the timer 64 counts a time elapsed from the moment when the touch panel 22 or any of the operation keys 31 through 33 was operated, and outputs it to the CPU 61.

The display section 21 is illuminated from its rear surface by a back light which is not illustrated. The display section controller 66 controls display of the display section 21 based on the orders from the CPU 61. As an example, the CPU 61, through the display section controller 66, causes the display section 21 to display the image such as document image or menu image stored in the RAM 63.

The touch panel controller 67 detects a position of touch by the operator on the touch panel 22, and outputs a result of the detection to the CPU 61. The CPU 61 determines what the inputted process request is based on both the position of touch on the touch panel 22 and an image displayed at the position corresponding to the position of touch on the display section 21, and then carries out a process such as' changing display on the display section 21 or outputting to the main control section of the main body 2 based on a result of the determination.

The CPU 61 detects, through the operation key input section 68, that one of the operation keys 31 through 33 has been pressed down, and carries out a process corresponding to the operation key that has been pressed down.

Respective output values of the plurality of first sensors 41 of the arm position sensing section 40 are inputted via the A/D converter 69 to the CPU 61. Since the first sensors 41 are installed in plurality, output values of the first sensors 41 are sequentially switched by the optical sensor input switcher 70, and are inputted to the CPU 61. Hereby, the respective output values of the first sensors 41 are sequentially inputted to the CPU 61.

Respective output values of the plurality of second sensors 51 of the physical position sensing section 50 are inputted via the A/D converter 71 to the CPU 61. Since the second sensors 51 are installed in plurality, output values of the second sensors 51 are sequentially switched by the optical sensor input switcher 72, and are inputted to the CPU 61. Hereby, the respective output values of the second sensors 51 are sequentially inputted to the CPU 61.

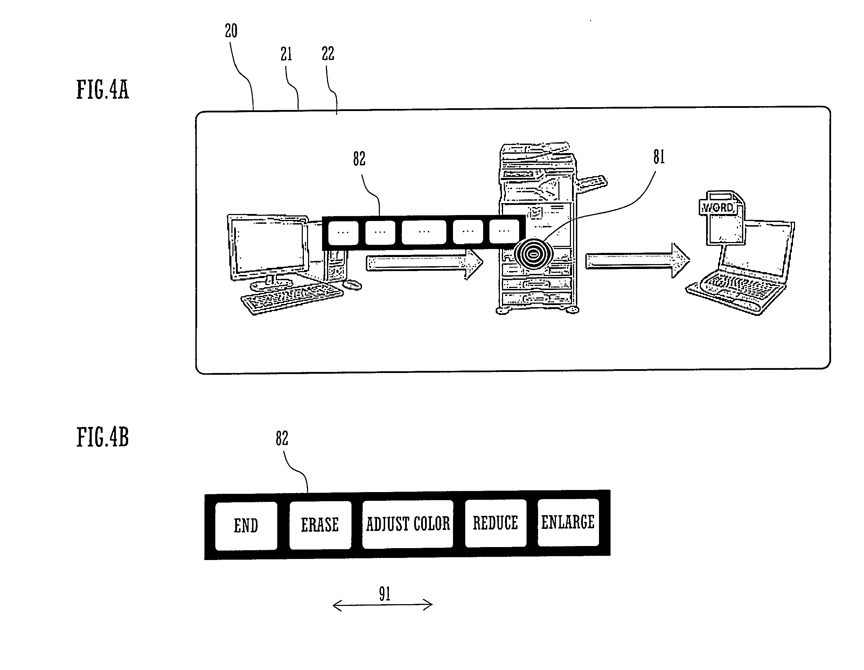

In the drawings such as FIG.4A, positions of touch 81 by the operator on the touch panel 22 are each shown in multiple circles. The CPU 61, on receiving an input to the effect that the touch panel 22 was touched during the display of a preset operating screen, immediately causes a pop-up image 82 to be displayed in the neighborhood of the position of touch 81. For example, when the operator touches the display input device 20 on a part of a displayed image the part of which he or she wants to edit, a menu for editing including options such as enlargement and reduction is displayed in the neighborhood of the position of touch 81. In this manner, because the manual operating device 10 is configured so as to allow an operator to operate it by touching the display input device 20 directly with hand, more intuitive and plainer operations for input are made available as compared with operations using a mouse or the like.

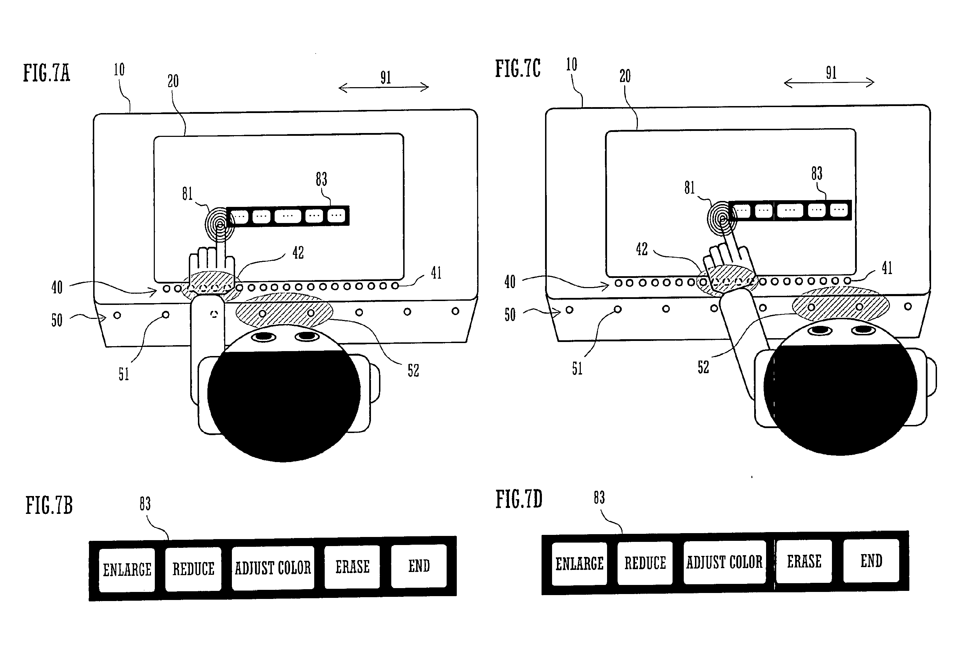

As shown in FIG.4B, the pop-up image 82 is an example of the menu image for editing that includes a plurality of options arranged in the right and left direction 91. The pop-up image 82 is stored beforehand in the RAM 63. As an example, in the RAM 63 are stored a plurality of pop-up images 82, 83 that are distinct from each other (refer to FIG.7B). The pop-up images 82, 83 are examples of a local image that is displayed on part of the display section 21. Among other examples of the local image are operating icons in the operating screen, message images showing warning information, guidance information and/or the like.

The CPU 61 controls display of the pop-up image 82 to the display section 21 based on a result of a right-or-left determination and a position of touch 81 that was detected. To be concrete, the CPU 61 controls a direction for display of a pop-up image 82 in relation to the position of touch 81.

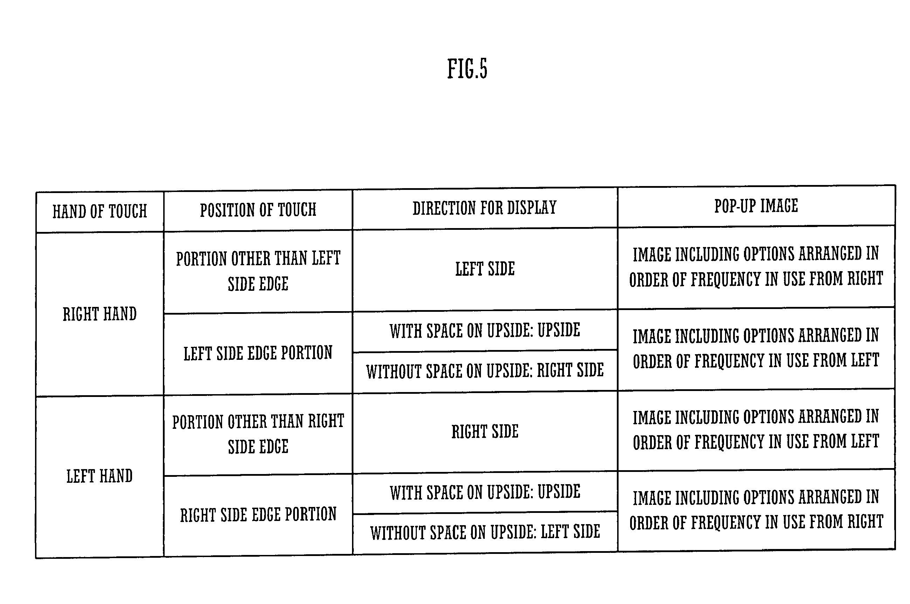

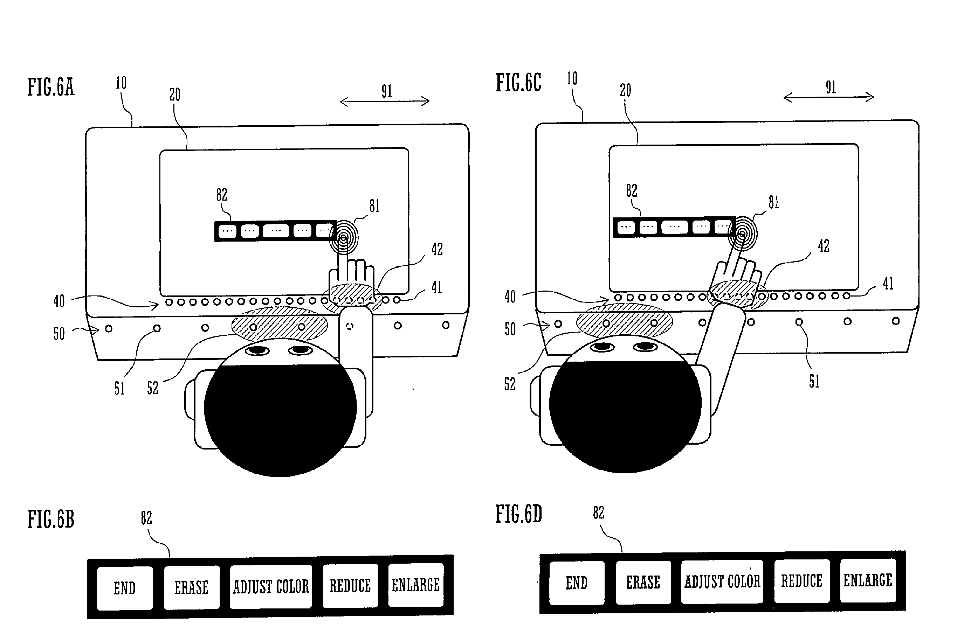

Shown in FIG.5 is an example of the display control of the pop-up image 82. FIG.6A shows a state in which the operator, standing in such a manner as to face middle part of the manual operating device 10, has touched right part of the display input device 20 with right hand; FIG.6B is a drawing showing an example of the pop-up image 82 displayed in the state of FIG.6A; FIG.6C shows a state in which the operator, standing in such a manner as to face left part of the manual operating device 10, has touched middle part of the display input device 20 with right hand; and FIG.6D shows an example of the pop-up image 82 displayed in the state of FIG.6C.

Also, FIG.7A shows a state in which the operator, standing in such a manner as to face middle part of the manual operating device 10, has touched left part of the display input device 20 with left hand; FIG.7B shows an example of the pop-up image 83 displayed in the state of FIG.7A; FIG.7C shows a state in which the operator, standing in such a manner as to face right part of the manual operating device 10, has touched middle part of the display input device 20 with left hand; and FIG.7D shows an example of the pop-up image 83 displayed in the state of FIG.7C.

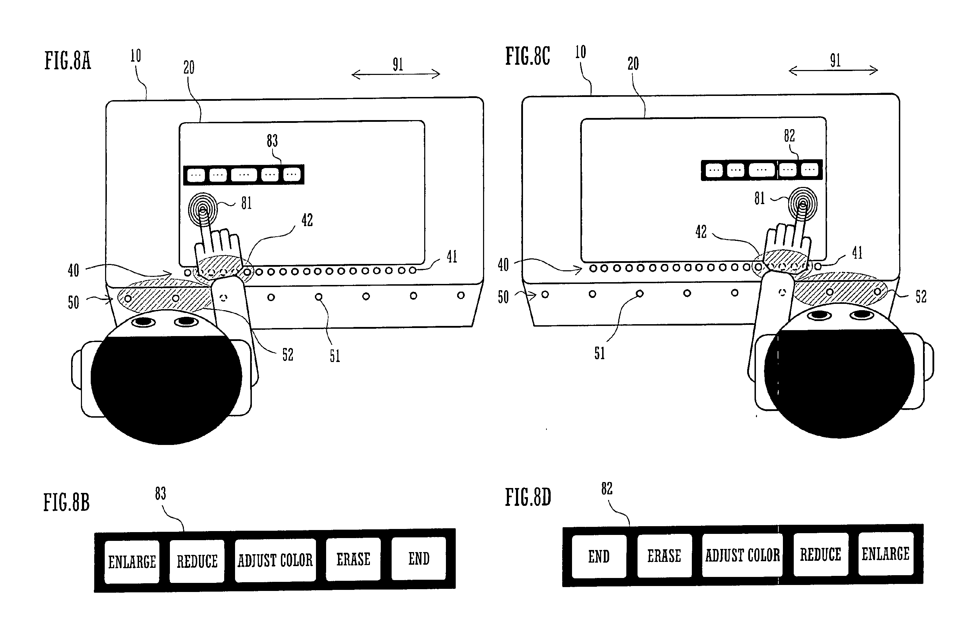

Further, FIG.8A shows a state in which the operator, standing in such a manner as to face left part of the manual operating device 10, has touched left side edge portion of the display input device 20 with right hand; FIG.8B shows an example of the pop-up image 83 displayed in the state of FIG.8A; FIG.8C shows a state in which the operator, standing in such a manner as to face right part of the manual operating device 10, has touched right side edge portion of the display input device 20 with left hand; and FIG.8D shows an example of the pop-up image 82 displayed in the state of FIG.8C.

As shown in FIG.6A and FIG.6C, when an operator stands in front of the image forming apparatus 1, output values of the second sensors 51 at slanted line portion 52 decrease within the physical position sensing section 50 due to the shadow cast by the operator's body. The CPU 61 always acquires the respective output values from the plurality of second sensors 51. The CPU 61 acquires a position of body based on the respective output values of the second sensors 51 at the time when the operator touched the touch panel 22.

Likewise, when the operator holds out an arm in order to touch the touch panel 22, output values of the first sensors 41 at slanted line portion 42 decrease within the arm position sensing section 40 due to the arm's shadow. The CPU 61 always acquires the respective output values from the plurality of first sensors 41. The CPU 61 acquires a position of arm based on the respective output values of the first sensors 41 at the time when the operator touched the touch panel 22.

The CPU61 makes a right-or-left determination as to whether it is left hand or right hand that the operator has touched the touch panel 22 with based on a relation between the position of body and the position of arm. To be concrete, the CPU 61 determines that it is left hand that has touched the touch panel 22 when the position of arm is found to be on the left side in relation to the position of body. The CPU 61 determines that it is right hand that has touched the touch panel 22 when the position of arm is found to be on the right side in relation to the position of body. Because a right-or-left determination is made based on a relation between a position of body and a position of arm, a result of correct right-or-left determination is acquired.

As a general rule, as shown in FIG.6A and FIG.6C, the CPU 61 causes the pop-up image 82 to be displayed in the neighborhood of left side of the position of touch 81 when the hand that has touched the touch panel 22 is right hand. Likewise, as shown in FIG.7A and FIG.7C, the CPU 61 causes the pop-up image 83 to be displayed in the neighborhood of right side of the position of touch 81 when the hand that has touched the touch panel 22 is left hand.

Hereby, situations are prevented where the pop-up images 82, 83 are hidden from an operator's view due to the operator's hand held out in between. Moreover, because the right-or-left determination is made correctly based on a relation between the position of body and the position of arm, display of the pop-up images 82, 83 is controlled appropriately based on the result of the correct right-or-left determination. Therefore, it becomes easy for the operator to view the pop-up images 82, 83, and thus operability of the device improves.

As an exceptional case, as shown in FIG.8A, the CPU 61 causes the pop-up image 83 to be displayed in the neighborhood of upside of the position of touch 81 when the hand that has touched the touch panel 22 is right hand and the position of touch 81 is left side edge portion where there is no room enough to display the pop-up image 82 on the left side, and when there is room enough to display the pop-up image 83 on the upside. Moreover, the CPU 61 causes the pop-up image 83 to be displayed in the neighborhood of right side of the position of touch 81 when the hand that has touched the touch panel 22 is right hand and the position of touch 81 is left side edge portion where there is no room enough to display the pop-up image 82 on the left side, and when there is no room enough to display the pop-up image 83 on the upside. Consequently, wherever the position of touch 81 may be on the touch panel 22, either the pop-up image 82 or the pop-up image 83 is displayed in a direction that can be viewed most easily in relation to the position of touch 81, thereby improving its operability.

Likewise, as shown in FIG.8C, the CPU 61 causes the pop-up image 82 to be displayed in the neighborhood of upside of the position of touch 81 when the hand that has touched the touch panel 22 is left hand and the position of touch 81 is right side edge portion where there is no room enough to display the pop-up image 82 on the right side, and when there is room enough to display the pop-up image 82 on the upside. Moreover, the CPU 61 causes the pop-up image 82 to be displayed in the neighborhood of left side of the position of touch 81 when the hand that has touched the touch panel 22 is left hand and the position of touch 81 is right side edge portion where there is no room enough to display the pop-up image 82 on the right side, and when there is no room enough to display the pop-up image 82 on the upside.

As shown in FIG.6A and FIG.7A, when a position of touch 81 is different from a position of arm in the right and left direction 91, it is possible to make the right-or-left determination by comparing the position of touch 81 with the position of arm; whereas when a position of touch 81 is the same as a position of arm in the right and left direction 91 as shown in FIG.6C and FIG.7C, it is not possible to acquire a correct result of the right-or-left determination by merely comparing the position of touch 81 with the position of arm. However, with the manual operating device 10, since the right-or-left determination is made based on comparison of the position of arm with the position of body, it is possible to obtain a correct result of the right-or-left determination.

It is preferable that a plurality of pop-up images 82, 83 which are distinct from each other are stored in the RAM 63, and that the CPU 61 selects a pop-up image which is caused to be displayed on the display section 21 from the plurality of pop-up images 82, 83 based on the result of the right-or-left determination.

The pop-up image 82 and the pop-up image 83 are menu images each including the plurality of options, but with arrangements in reverse order between each other. To be concrete, the pop-up image 82 includes the options arranged in the order of frequency in use from the right end, while the pop-up image 83 includes the options arranged in the order of frequency in use from the left end.

As shown in FIG.6B and FIG.6D, when the hand that has touched the touch panel 22 is right hand, the pop-up image 82 in which the options are arranged in the order of frequency in use from the right edge is displayed generally in the neighborhood of left side of the position of touch 81. As shown in FIG.7B and FIG.7D, when the hand that has touched the touch panel 22 is left hand, the pop-up image 82 in which the options are arranged in the order of frequency in use from the left edge is displayed generally in the neighborhood of right side of the position of touch 81. Displaying the pop-up images 82, 83 in which any of the options having the higher frequency in use is arranged the nearer to the position of touch 81 makes it possible to shorten manual travel required for touching the touch panel 22, thereby increasing operability of the device.

However, even in the case where the hand that has touched is right hand as stated above, the pop-up image 83 is displayed as shown in FIG.8B when there is no space to display the pop-up image 82 on the left side of the position of touch 81. Likewise, even in the case where the hand that has touched is left hand, the pop-up image 82 is displayed as shown in FIG.8D when there is no space to display the pop-up image 83 on the right side of the position of touch 81.

Next, explained below is a process to determine a position of arm based on respective output values of a plurality of first sensors 41 of the arm position sensing section 40. Also, similar to the above is a process to determine a position of body based on respective output values of a plurality of second sensors 51 of the physical position sensing section 50.

FIG.9A shows an example of a relationship between respective output values from a plurality of first sensors 41 of the arm position sensing section 40 and their positions in the right and left direction 91.

In a first determination process method, it is deemed that output values from the first sensors 41 that are blocked from the light by an arm decrease the more the nearer they are to the middle of the arm; and thus the position at which the output value results in the minimum value among the plurality of first sensors 41 is detected as center position of arm in the right and left direction 91. Hereby, the center position of arm is detected by a simple process. The right-or-left determination is made by comparing the center position of body with the center position of arm.

In FIG.9B, shown in black dots (•) is the example of the relationship between the respective output values from the plurality of first sensors 41 of the arm position sensing section 40 and their positions in the right and left direction 91; and shown in black rectangular boxes (■) is an example of respective reference values for the first sensors.

In a second determination process method, preset reference values for the respective plurality of first sensors 41 are stored in the control section 60; and then center position of arm in the right and left direction 91 is detected by comparing respective output values of the plurality of first sensors 41 with the respective reference values therefor.

To be concrete, comparison is made for each of the first sensors 41 between its output value and its reference value, and respective comparative output values are acquired in such a manner as to be recognized as LOW if the output value is smaller than the reference value (i.e. output value < reference value), and HIGH if the output value is not smaller than the reference value (i.e. output value ≥ reference value). Shown in FIG.9C is an example of the respective comparative output values of the first sensors 41.

In the example shown in FIG.9C, the values resulted in HIGH at three positions 43, 44, 45 including the sensor position 43 that was detected as the center position of arm in the first determination process method, and LOW at the rest of the sensor positions. In the second determination process method, the central sensor position 44 is detected as the center position of arm among the sensor positions 43, 44, 45 that yielded HIGH.

Even when there is variation in output value among the plurality of first sensors 41, it is possible to detect the center position of arm or the center position of body accurately by sensing the center position of arm or the center position of body through the comparison with the reference values that correct the variation, thereby increasing the accuracy of determination as to whether it is left hand or right hand that has touched the display input device 20.

As an example, the reference values are output values of the first sensors 41 and the second sensors 51 that have been acquired beforehand under a predetermined condition for every individual of the manual operating device 10 and that are stored in the ROM 62.

Also, as another example, designated as the reference values may be values established based on the respective output values of the plurality of first sensors 41 at the time past a predetermined time since last time an operator operated the touch panel 22 or the operation keys 31 through 33. To be concrete, it is dealt with, for example, as follows. First, the CPU 61 causes the timer 64 to start from the time when the touch panel 22 or the operation keys 31 through 33 is operated. The CPU 61 determines that the operator left from the front of the manual operating device 10 when measured time on the timer 64 has passed beyond the predetermined time, and then acquires the respective output values of the first sensors 41 at that time. The CPU 61 causes the RAM 63 to store the results as the reference values that have been acquired from performing a process such as subtracting predetermined values from the output values.

Hereby, in cases where optical sensors are used for the arm position sensing section 40 and the physical position sensing section 50, even if conditions such as outdoor daylight and/or the like at an installation site of the image forming apparatus 1 change with time and the respective output values of the first sensors 41 and the second sensors 51 fluctuate in a situation where there is no operator in front of the manual operating device 10, it is still possible to establish the reference values depending on the conditions that have changed, thereby allowing to detect correctly the center positions of arm and the center position of body. In this manner, influences of weather at the time of the manual operating device 10 in use and of time zone within a day on the quantity of light incident on the optical sensors are reduced. As a result, the accuracy of determination as to whether it is left hand or right hand that has touched the display input device 20 is increased.

In addition, in the above mentioned embodiment the optical sensor that includes light receiving element but does not include light emitting element is used for the first sensor 41; however, an optical sensor including both light emitting element and light receiving element may be used. In the case where the optical sensor including both light emitting element and light receiving element is used for the first sensor 41, output value of the first sensor 41 rises as the arm gets closer to the first sensor 41. Therefore, the position at which the output value results in the maximum value among a plurality of first sensors 41 can be detected as center position of arm.

Likewise, an optical sensor including both light emitting element and light receiving element may be used for the second sensor 51. In the case where the optical sensor including both light emitting element and light receiving element is used for the second sensor 51, the position at which the output value results in the maximum value among a plurality of second sensors 51 can be detected as center position of body.

Moreover, an ultrasonic sensor may be used instead of the optical sensor for at least either of the first sensor 41 and the second sensor 51.

Further, even in a case where the device is configured in such a manner that the same pop-up image is displayed regardless of whether it is left hand or right hand that has touched the touch panel 22, its operability increases in a sense that a situation is prevented where the pop-up image is hidden by the hand that touches the touch panel 22.

Also, the right-or-left determination may be made based on the position of touch 81, the position of arm and the position of body. For example, when the position of arm is the same as the position of body in the right and left direction 91, the right-or-left determination can be made by comparing the position of arm and the position of body with the position of touch 81. For example, even when the operator touches the touch panel 22 with right hand standing and facing diagonally to the left in relation to the manual operating device 10 and the position of arm and the position of body are the same in the right and left direction 91, because in such a case the position of touch 81 should be located on further left side than the position of arm, it is still possible to determine that the hand that has touched is right hand when the position of touch 81 is on the left side of the position of arm and the position of body. Likewise, it is also possible to determine when the position of arm and the position of body are the same in the right and left direction 91 and the position of touch 81 is on the right side of the position of arm and the position of body. Hereby, the right-or-left determination can be made correctly even when an event occurs in which the position of body is the same as the position of arm in the right and left direction 91.

Further still, although the arm position sensing section 40 performs the sensing operation between the position of touch 81 and the physical position sensing section 50, the plurality of first sensors 41 of the arm position sensing section 40 are not limited to be disposed on the front face side from the display input device 20. The first sensors 41 may be included in the display input device 20. For example, a LCD display with built-in optical sensor may be used as the display input device 20. The LCD display with built-in optical sensor includes optical sensors within a LCD panel, and is configured so as to recognize a finger touch or its movement on the surface of the LCD panel without requiring a touch panel. Employing a LCD display with built-in optical sensor as the display input device 20 enables the display input device 20 to detect both the position of touch 81 and the position of arm without incorporating an arm position sensing section 40 separately. In addition, since shadow of the direction to which an arm extends from the position of touch 81 is detected two-dimensionally, accuracy in sensing the position of arm increases more. When the LCD display with built-in optical sensor is employed as the display input device 20, optical sensors disposed on the front face side from the position of touch 81 play a role as the first sensors 41 of the arm position sensing section 40.

Moreover, in a case where a display control is performed by which an operating screen is switched to another operating screen sequentially with position thereof being slid along the right and left direction 91 each time the display input device 20 is touched, the device may be configured in such a manner that the CPU 61, based on the right-or-left determination, causes the operating screen to be slid from left side to right side when it determines that touch has been made with right hand, and causes the operating screen to be slid from right side to left side when it determines that touch has been made with left hand. This allows the next operating screen to be displayed in a direction that will not be hidden by the hand that has made the touch, thereby increasing operability of the device.

The above explanation of the embodiment is nothing more than illustrative in any respect, nor should be thought of as restrictive. Scope of the present invention is indicated by claims rather than the above embodiment. Further, it is intended that all changes that are equivalent to a claim in the sense and realm of the doctrine of equivalence be included within the scope of the present invention.

## Claims

1. A manual operating device comprising:
a display input device (20) including a display section (21) that displays an operating screen, and a touch position sensing section (22) that detects a position of touch by an operator on the display section;
an arm position sensing section (40) that detects an arm of the operator at a plurality of positions in a right and left direction (91);
a physical position sensing section (50) that detects a body of the operator at the plurality of positions in the right and left direction (91); and
a control section (60) that makes a determination as to whether it is right hand or left hand that the operator has touched the touch position sensing section (22) with based on results detected by the arm position sensing section (40) and the physical position sensing section (50) and that controls display of the display section (21) based on a result of the right-or-left determination.

2. The manual operating device as claimed in claim 1, wherein the control section (60) controls a direction for display of a local image (82,83) displayed on part of the display section (21), in relation to the position of touch based on the result of the right-or-left determination.

3. The manual operating device as claimed in claim 2, wherein the control section (60) stores a mutually distinct plurality of the local images (82, 83) to be displayed on part of the display section (21) and selects a local image (82, 83) that is caused to be displayed on the display section (21) from the plurality of local images (82, 83) based on the result of the right-or-left determination.

4. The manual operating device as claimed in claim 1, wherein at least either of the arm position sensing section (40) and the physical position sensing section (50) includes a plurality of sensors, and wherein
the control section (60) detects a position at which an output value results in a minimum or maximum value among the plurality of sensors as center position of arm or as center position of body in the right and left direction.

5. The manual operating device as claimed in claim 1, wherein at least either of the arm position sensing section (40) and the physical position sensing section (50) includes a plurality of sensors, and wherein
the control section (60) stores preset reference values for the respective plurality of sensors, and detects center position of arm or center position of body in the right and left direction by comparing respective output values of the plurality of sensors with the respective reference values therefor.
